# EUROPÄISCHE PATENTSCHRIFT

(11) **EP 2 479 125 B1**
(45) Veröffentlichungstag und Bekanntmachung des Hinweises auf die Patenterteilung: **02.10.2013**
(21) Anmeldenummer: 12150217.3
(22) Anmeldetag: 05.01.2012
(51) Int. Cl.: B65G 47/22, B65G 47/24, F27D 3/12, B65G 49/08

(54) **Transportsystem und Transportverfahren für Formlinge**
Transport system and transport method for blanks
Système de transport et procédé de transport pour ébauches

(30) Priorität: 25.01.2011 DE 102011003094
(43) Veröffentlichungstag der Anmeldung: 25.07.2012
(73) Patentinhaber: Hans Lingl Anlagenbau und Verfahrenstechnik GmbH & Co. KG, 86381 Krumbach (DE)
(72) Erfinder: Göppel, Otto, 86498 Kettershausen (DE)
(74) Vertreter: Körber, Martin Hans

(56) Entgegenhaltungen:
- DE-A1- 3 800 583
- DE-T2- 69 704 644

## Beschreibung

Die Erfindung betrifft ein Transportsystem oder ein Transportverfahren zum Transportieren von Formlingsträgem, auf denen Formlinge, wie Dachziegel oder ähnliche Produkte, liegen. Insbesondere bietet das Transportsystem bzw. -verfahren eine neue und verbesserte Möglichkeit zur Fixierung und Zentrierung der Formlingsträger.

Es ist bei der Herstellung von Formlingen, wie zum Beispiel Dachziegeln, bekannt, die Rohziegel auf einzelne Träger zu stellen und diese Formlingsträger auf einem geeigneten Transportmittel, zum Beispiel einem Rollwagen, durch einen Ofen oder Trockner zu transportieren. Die üblicherweise verwendeten Formlingsträger weisen meist eine Form auf, die an den Buchstaben H erinnert. Deshalb werden solche Formlingsträger auch H-Kassetten genannt. Das Be- und Entladen der Formlingsträger mit den Formlingen erfordert eine exakte Lage der Formlingsträger auf dem Transportmittel. Die Formlinge wiederum liegen in den Formlingsträgern an genau vorgegebenen Auflagen, um eine möglichst gute Qualität und Formstabilität zu gewährleisten.

Aus dem Stand der Technik ist es bekannt, die Formlingsträger während des Be- und Entladens und während des Transports auf dem Rollwagen zu fixieren, um ein Verrutschen oder Herunterfallen zu vermeiden. Die Fixierung und Zentrierung der Formlingsträger im Stand der Technik wird üblicherweise mit einem Rollensystem ausgeführt, welches die Formlingsträger an ihren Stützfüßen fixiert und positioniert.

Aus der Druckschrift DE 697 04 644 T2 ist ein Transportsystem gemäß dem Oberbegriff des Anspruchs 1 bekannt. Weiterhin offenbart diese Druckschrift dass die Füße des Formlingsträgers zwischen zwei Rollen, die in etwa einen Abstand entsprechend der Dicke der Füße aufweisen, gesetzt und somit fixiert wird. Dies ist beispielsweise in der Figur 1 der obigen Druckschrift gezeigt. Auch in der Druckschrift DE 41 04 806 C1 wird, wie zum Beispiel in deren Figur 4 gezeigt, eine Rolle verwendet, um die Füße eines Formlingsträgers zu fixieren.

Ein wesentlicher Nachteil des oben genannten Stands der Technik liegt aber genau in dieser Art der Zentrierung und Fixierung der Formlingsträger während des Transports und eines Be- und Entladevorgangs auf ein Transportmittel. Die Formlingsträger werden wie beschrieben auf dem Transportmittel formschlüssig mittels einer fest montierten Einrichtung mit Rollen fixiert. Eine solche Vorrichtung hat den Nachteil, dass die Formlingsträger beim Einsetzen an ihren Füßen beschädigt werden können, oder bei zu großer Ungenauigkeit auf der Vorrichtung aufliegen. Die Füße der Formlingsträger sind dem größten Verschleiß durch Rutschen, Verschieben, Stapeln usw. ausgesetzt ist, und müssen deshalb besonders geschützt werden. Als weiterer Nachteil ist im Stand der Technik ein relativ großer Kraftaufwand zum Ausrichten und Zentrieren der Formlingsträger nötig.

Die vorliegende Erfindung stellt sich daher zur Aufgabe, den Stand der Technik bezüglich der oben genannten Nachteile zu verbessern. Insbesondere ist die Aufgabe der vorliegenden Erfindung, Formlingsträger auf einem Transportmittel auszurichten und zu zentrieren, ohne die Füße der Formlingsträger zu beschädigen. Zudem soll zur Ausrichtung und Zentrierung der Formlingsträger nur ein geringer Kraftaufwand notwendig sein, um die Formlingsträger nicht zu beschädigen.

Die gestellten Aufgaben werden durch die unabhängigen Ansprüche der vorliegenden Erfindung gelöst. Die abhängigen Ansprüche bilden den Erfindungsgedanken vorteilhaft weiter.

Die vorliegende Erfindung betrifft ein Transportsystem für Formlinge aufweisend wenigstens einen Formlingsträger zum Aufnehmen von Formlingen, der wenigstens zwei seitliche Füße und ein Positionierungselement auf seiner Unterseite aufweist, wenigstens ein Transportmittel zum Transportieren des wenigstens ein Formlingsträgers, dadurch gekennzeichnet, dass das Transportmittel aufweist einen im vertikaler Richtung beweglichen Heber zum Tragen der wenigstens zwei seitlichen Füße des wenigstens einen Formlingsträgers, eine Positionierungseinrichtung zum Tragen der Unterseite des wenigstens einen Formlingsträgers, die ferner dazu ausgelegt ist, in das wenigstens eine Positionierungselement einzugreifen, wobei das Transportsystem dazu ausgelegt ist, den Heber abzusenken, bis die seitlichen Füße bis wenigstens einen Formlingsträgers frei sind, und bei abgesenktem Heber den wenigstens einen Formlingsträger bezüglich seiner Lage und Position auf dem Transportmittel mittels der Positionierungseinrichtung auszurichten.

Dadurch, dass der Heber, der die seitlichen Füße trägt, abgesenkt wird bevor die Ausrichtung der Formlingsträger vorgenommen wird, so dass deren seitliche Füße frei, das heißt ohne Unterstützung frei schwebend hängen, wird nur noch die Unterseite des Formlingsträgers durch die Positionierungseinrichtung getragen. Da die Füße frei sind und nicht aufstehen, werden sie bei der Ausrichtung der Lage und der Position des Formlingsträgers nicht beschädigt. Die Füße müssen zur Ausrichtung und Zentrierung des Formlingsträgers nicht gegriffen werden, wodurch sie geschont werden. Da die Füße seitlich angeordnet sind, liegt der Formlingsträger bei abgesenktem Heber nur noch mit seiner Unterseite, das heißt im Bereich zwischen den seitlichen Füßen, auf und kann deshalb durch die Positionierungseinrichtung ohne großen Kraftaufwand ausgerichtet werden.

Vorteilhafterweise weist der wenigstens eine Formlingsträger eine rechteckige Form auf, wobei jeweils wenigstens ein seitlicher Fuß an zwei seiner gegenüberliegenden Enden angeordnet ist und wenigstens zwei Positionierungselemente mittig des Formlingsträgers zwischen den wenigstens zwei seitlichen Füßen angeordnet sind.

Diese Form entspricht der Form der oben genannten H-Kassetten. Durch die Anordnung der zwei Positionierungselemente mittig des Formlingsträgers kann der Formlingsträger über einen zentralen Drehpunkt mit geringem Kraftaufwand gedreht oder verschoben werden. Dadurch wird eine Beschädigung des Formlingsträgers unwahrscheinlich.

Vorteilhafterweise weist die Positionierungseinrichtung eine Auflagefläche zum Tragen der Unterseite des wenigstens einen Formlingsträgers in einem Bereich zwischen den zwei seitlichen Füßen und zwischen den wenigstens zwei Positionierungselementen auf und weist wenigstens zwei bewegliche Positionierungsarme zum Eingreifen in die wenigstens zwei Positionierungselemente auf.

Durch die Auflagefläche wird der Formlingsträger getragen und es wird den zwei seitlichen Füßen ermöglicht, frei und ohne Unterstützung zu hängen. Da sich die Auflagefläche zwischen den zwei Positionierungselementen befindet und die Positionierungselemente zwei bewegliche Arme sind, kann ein einfaches Verdrehen über die Auflagefläche als Drehpunkt mit geringem Kraftaufwand vorgenommen werden. Zwei Positionierungsarme ermöglichen sowohl ein Verschieben als auch ein Verdrehen des Formlingsträgers auf dem Transportmittel.

Vorteilhafterweise ist die Positionierungseinrichtung dazu ausgelegt, den wenigstens einen Formlingsträger zur Ausrichtung dessen Lage und Position auf dem Transportmittel mittels der Positionierungsarme zu verschieben und/oder zu verdrehen.

Dadurch kann eine präzise und flexible Ausrichtung und Zentrierung des Formlingsträgers auf dem Transportmittel vorgenommen werden.

Vorteilhafterweise sind die wenigstens zwei Positionierungselemente wenigstens zwei Aussparungen in dem wenigstens einen Formlingsträger und die Positionierungsarme dazu ausgelegt, in je eine der Aussparungen zu greifen und sich zu schließen.

Aussparungen sind einfach herzustellende Positionierungselemente, in welche die Positionierungsarme hineingreifen können. Die Positionierungsarme können dabei in die Aussparungen eingeführt werden und können auch wieder zurückgezogen werden. Oberhalb der Aussparungen, das heißt auf der Oberseite des Formlingsträgers, könnten die Positionierungsarme ineinander greifen, um somit einen Verschluss herzustellen. Die Positionierungsarme können aber auch nur bezüglich ihrer Beweglichkeit (Drehen, Verschieben) blockierbar, d.h. verschließbar sein. Durch die oben genannte Konstruktion ist ein einfaches Positionieren und Verschieben der Formlingsträger möglich. Durch das Schließen der Positionierungsarmen kann während des Transports gewährleistet sein, dass die eingestellte Position beibehalten wird.

Vorteilhafterweise weist der Heber wenigstens zwei Halteelemente zum Halten jeweils eines seitlichen Fußes des wenigstens einen Formlingsträgers auf, wobei die Halteelemente abgesenkt werden können.

Dadurch wird die Unterstützung unter den Füßen entfernt, wodurch die Füße beim Ausrichten nicht mehr beschädigt werden.

Vorteilhafterweise weist die Positionierungseinrichtung wenigstens eine Auflage auf, auf welche die Halteelemente des Hebers in dessen abgesenktem Zustand gestützt sind.

Dadurch wird eine konstruktiv bedingte Absenktiefe für den Heber definiert und die Halteelemente müssen nicht speziell angehalten oder in abgesenktem Zustand fixiert werden. Der konstruktive Aufwand wird daher verringert.

Vorteilhafterweise ist das wenigstens eine Transportmittel ein Transportwagen, der mittels eines Fahrantriebs horizontal auf einem Transportband des Transportsystems transportierbar ist.

Es ist denkbar, mehrere Formlingsträger auf einem Transportwagen zu stapeln. Es ist weiterhin denkbar, mehrere Transportwägen hintereinander auf dem Transportband horizontal zu transportieren. Für mehrere auf einem Transportwagen transportierte Formlingsträger kann ein Heber und eine eigene Positionierungseinrichtung für jeden Formlingsträger vorhanden sein. Alternativ kann eine kollektive Ausrichtung durch eine einzelne Hebeeinrichtung und eine einzelne Positionierungseinrichtung für alle Formlingsträger gleichzeitig ausgeführt werden.

Die Erfindung betrifft ferner ein Transportverfahren für Formlinge, das die Schritte aufweist: Auflegen zu transportierender Formlinge auf wenigstens einem Formlingsträger, der wenigstens zwei seitliche Füße und ein Positionierungselement auf seiner Unterseite aufweist, Aufbringen des wenigstens einen Formlingsträgers auf einem Transportmittel eines Transportsystems, so dass ein Heber des Transportmittels die seitlichen Füße trägt und eine Positionierungseinrichtung des Transportmittels die Unterseite trägt, wobei die Positionierungseinrichtung ferner in das wenigstens eine Positionierungselement eingreift, Absenken des Hebers, bis die seitlichen Füße frei sind, Ausrichten der Lage und Position des Formlingsträgers auf dem Transportmittel mittels der Positionierungseinrichtung.

Vorteilhafterweise wird der Heber abgesenkt und auf eine Auflage der Positionierungseinrichtung gestützt.

Vorteilhafterweise greift die Positionierungseinrichtung mit wenigstens zwei Positionierungsarmen in wenigstens zwei Positionierungselemente ein, wobei sich die Positionierungsarme schließen.

Vorteilhafterweise bleiben die wenigstens zwei Positionierungsarme während des Transports der Formlinge geschlossen und der Heber wird zum Transport angehoben, so dass er die seitlichen Füße des Formlingsträgers trägt.

Vorteilhafterweise werden die wenigstens zwei Positionierungsarme vor dem Entfernen des Formlingsträgers von dem Transportmittel geöffnet.

Das erfindungsgemäße Verfahren weist dieselben Vorteile wie das erfindungsgemäße Transportsystem auf.

Die vorliegende Erfindung wird im Folgenden mit Bezug auf die angefügten Zeichnungen im Detail beschrieben.
- Figur 1: zeigt eine Vorderansicht, eine Seitenansicht und eine Draufsicht eines Formlingsträgers des erfindungsgemäßen Transportsystems.
- Figur 2: zeigt eine detaillierte Skizze eines erfindungsgemäßen Transportsystems in Vorderansicht.
- Figur 3: zeigt detaillierte Skizzen eines erfindungsgemäßen Transportsystems in Seitenansicht und in Draufsicht.
- Figur 4: zeigt eine schematische Darstellung des erfindungsgemäßen Transportsystems in Vorderansicht und in Seitenansicht.
- Figur 5: zeigt Schritte eines erfindungsgemäßen Transportverfahrens und schematische Darstellungen eines Teils des erfindungsgemäßen Transportsystems, die den einzelnen Verfahrensschritten entsprechen.

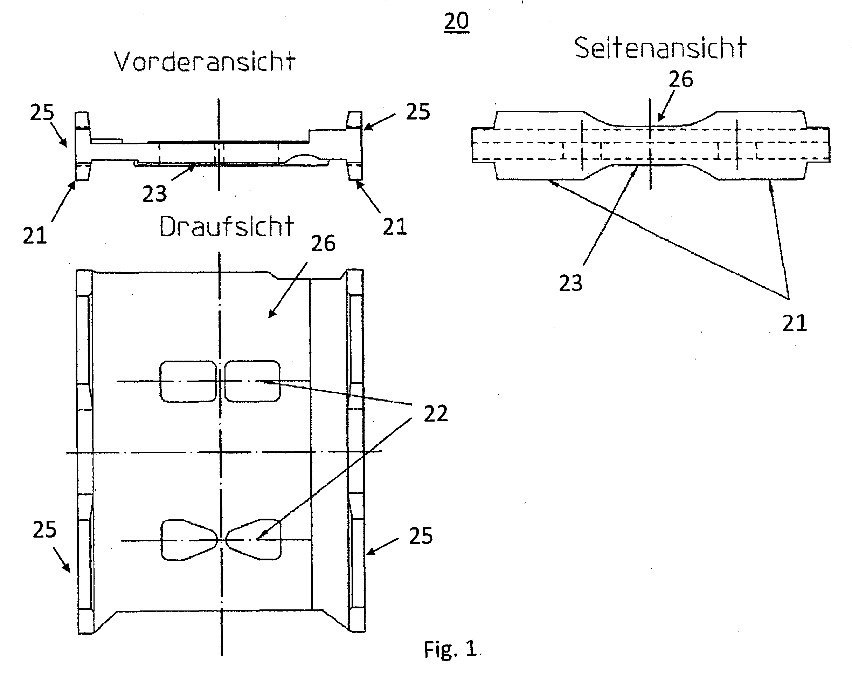

Figur 1 zeigt einen Formlingsträger 20 in Vorderansicht, Seitenansicht und Draufsicht, wie er beispielsweise in dem erfindungsgemäßen Transportsystem 1 verwendet wird. Der Formlingsträger 20 ist vorzugsweise eine flache rechteckförmige Platte aus beispielsweise Keramik. Die Form des Formlingsträgers 20 kann allerdings auch von der Rechtecksform abweichen, und andere Materialien außer Keramik, welche ähnliche Eigenschaften, wie z.B. dessen Hitzebeständigkeit, aufweisen können verwendet werden. Die Platte weist eine Oberseite 26 und eine Unterseite 23 auf. Die Oberseite 26 wird zum Auflegen von Formlingen , wie zum Beispiel Dachziegeln oder anderen Rohziegelstücken verwendet und gestaltet. Vorzugsweise ist die Oberseite 26 so gestaltet, dass die Formlinge passgenau darauf aufgenommen werden können. Insbesondere ragen vorteilhafterweise geeignete Elemente nach oben weg, die den Formling auf dem Formlingsträger 20 wenigstens seitlich fixieren und positionieren.

Der Formlingsträger 20 weist seitlich an seiner Unterseite Füße 21 auf, wenigstens einen Fuß 21 an der Kante jeder von zwei sich gegenüberliegenden Seiten 25. Allerdings können, wie in der Draufsicht erkennbar ist, auch jeweils zwei Füße 21 auf jeder der Seiten 25 vorgesehen sein. In der Seitenansicht ist zu sehen, wie die zwei Füße 21 seitlich angeordnet sein können, um einen freiliegenden Bereich der Unterseite 23 erzeugen. In der Draufsicht sind zudem Positionierungselemente 22 zu sehen, die zum Beispiel als Aussparungen in der Platte des Formlingsträgers 20 ausgebildet sind. Diese Aussparungen liegen dabei vorteilhafterweise zwischen den seitlichen Füßen. Wenigstens zwei Positionierungselemente 22 sollten mit ausreichendem Abstand voneinander an dem Formlingsträger 20 angeordnet sein, wobei der Abstand groß genug sein sollte, dass der Formlingsträger 20 zwischen den zwei Positionierungselementen 22 auf eine geeignete Auflage gelegt und von dieser stabil getragen werden kann.

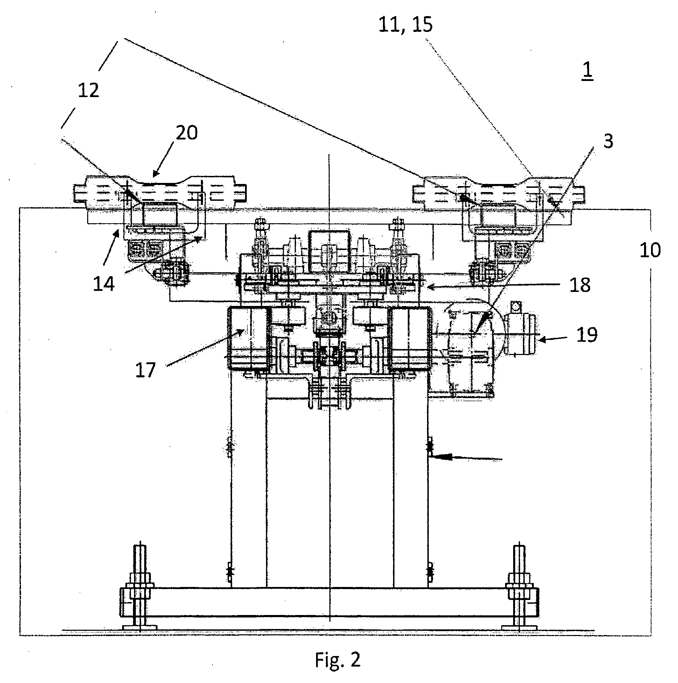

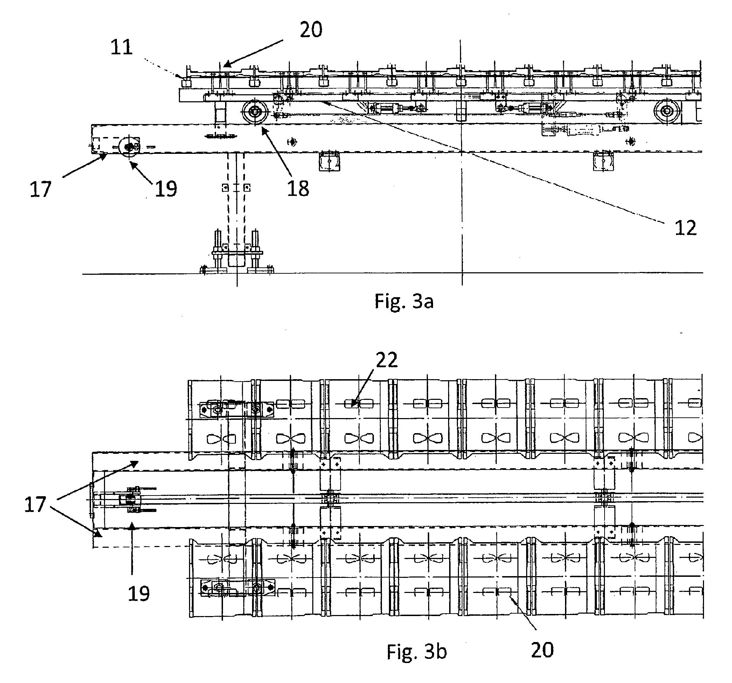

Figur 2 zeigt ein erfindungsgemäßes Transportsystem 1. Das Transportsystem 1 besteht aus den oben beschriebenen Formlingsträgern 20, wobei wenigstens ein Formlingsträger 20 zum Aufnehmen von wenigstens einem Formling vorgesehen ist, und wenigstens einem Transportmittel 10 zum Transportieren des wenigstens einen Formlingsträgers 20. In Figur 3 ist das Transportmittel 10 eine Förderband-Anordnung 17, auf der ein Rollwagen horizontal transportiert werden kann. Auf dem Rollwagen werden die Formlingsträger 20 transportiert. Dasselbe erfindungsgemäße System 1 ist in der Seitenansicht in Figur 3a und in der Draufsicht in Figur 3b dargestellt. Dabei ist zu erkennen, dass beispielweise zwei Transportbänder 17 parallel angeordnet sind, um jeweils eine Reihe von Formlingsträgern 20 zu transportieren. Die Transportbänder 17 werden jeweils durch einen geeigneten Antrieb 19 angetrieben, und der Rollwagen wird über geeignete Antriebsräder 18 bewegt. Das Transportmittel 10 weist zudem wenigstens eine Positionierungseinrichtung 12 und wenigstens einen Heber 11 auf. Selbstverständlich kann die Erfindung auch mit einem einzelnen oder mehreren Transportbändern 17 ausgeführt werden. Auch die Ausgestaltung des Rollwagens ist lediglich ein bevorzugtes Beispiel und andere Methoden, die Formlingsträger horizontal zu bewegen können implementiert werden.

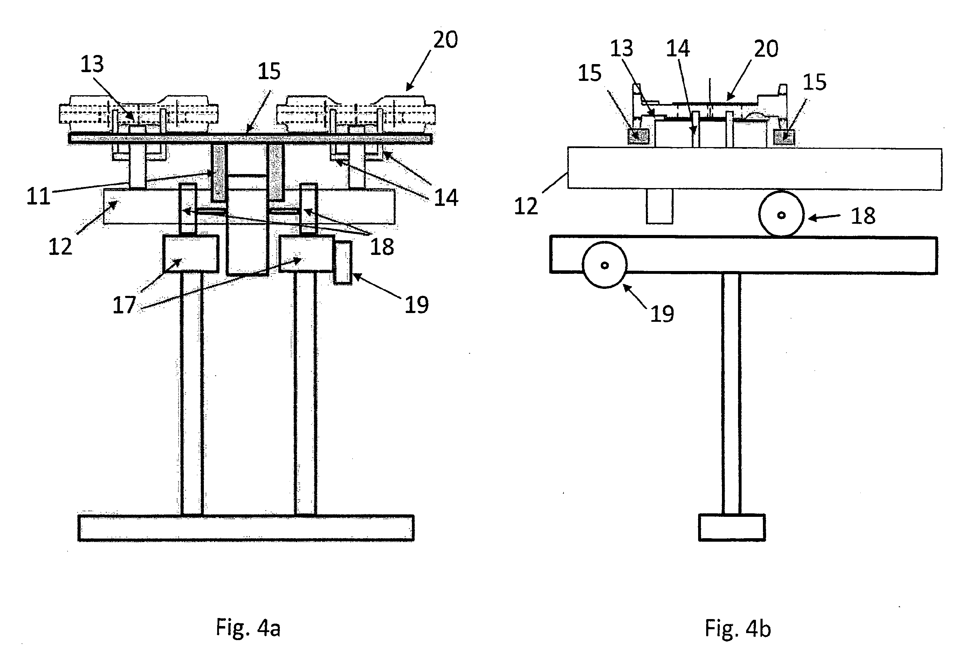

Die Figuren 2 und 3 zeigen viel Detail, allerdings wird das erfindungsgemäße Transportsystem 1 im Folgenden anhand der vereinfachten Figuren 4a und 4b zur besseren Anschaulichkeit erklärt. Gleiche Bezugszeichen in den Figuren beziehen sich dabei auf gleiche Elemente der Erfindung. Über die zwei Transportbänder 17 oder durch andere geeignete Transportmittel, wie z. B. einen Zahnriemen, eine Transportkette oder dergleichen, kann ein Rollwagen bewegt werden, auf dem beispielsweise zweireihig Formlingsträger 20 angebracht sind. Die Transportbänder 17 treiben Antriebsräder 18 an, die vorteilhafterweise mit einer Achse verbundenen, um den Rollwagen horizontal zu bewegen. Die Transportbänder 17 werden von einem Rahmen getragen, der die notwendige Stabilität des Transportsystems 1 gewährleistet. In Figur 4a ist zu sehen, dass jeder Formlingsträger 20 mit seinen Füßen 21 auf einem Heber 11 aufgesetzt ist, das heißt von dem Heber 11 getragen wird. Insbesondere besitzt der Heber 11 vorteilhafterweise ein Halteelement 15, das dazu ausgelegt ist, die Füße 21 der Formlingsträger 20 zu tragen. Vorteilhafterweise ist in dieser Ausführungsform mit zwei parallelen Transportbändern 17 jeweils ein Halteelement 15 dazu geeignet, wenigstens einen Formlingsträgern 20 jeder Reihe, d.h. auf jedem der Transportbänder 17 zu halten. Wie in Figur 4b in der Seitenansicht gezeigt ist, weist das Halteelement 15 zum Beispiel eine schmale Stange auf, auf der nur die Füße 21 des Formlingsträgers 20 abgesetzt werden. Die Breite der Stange ist dabei gleich groß oder geringfügig größer als die Breite der Füße 21. Die Formlingsträger 20 werden weiterhin von einer Positionierungseinrichtung 12 gehalten, insbesondere von einer Auflage 13 der Positionierungseinrichtung 12, welche die Unterseite 23 zwischen den Füßen 21 der Formlingsträger 20 trägt. Die Auflagefläche 13 trägt den Formlingsträger 20 vorzugsweise mittig, aber kann diesen zum Beispiel über seine gesamte Breite, wie in der Seitenansicht in Figur 4 dargestellt, tragen.

Die Positionierungseinrichtung 12 greift ferner in Positionierungselemente 22 der Formlingsträger 20 ein. In Figur 4a weist die Positionierungseinrichtung wenigstens zwei Positionierungsarme 14 für jeden Formlingsträger 20 auf, die mit den Positionierungselementen 22 eingreifen. Sind die Positionierungselemente 22 beispielsweise die oben beschrieben Aussparungen in dem Formlingsträger 20, so können die Positionierungsarme 14 in diese Aussparungen eingeführt werden.

Der Heber 11, der in den Figuren 4a und 4b in Grau gekennzeichnet ist, kann in vertikaler Richtung, das heißt senkrecht zur Auflagefläche 23 des Formlingsträgers 20 bewegt werden. Die Halteelemente 15 des Hebers 11 können abgesenkt werden und auf eine Auflage 13 der Positionierungseinrichtung 12 gestützt werden. Wenn die Halteelemmente 15 des Hebers 11 abgesenkt werden, so werden die seitlichen Füße 21 der Formlingsträger 20 nicht mehr von den Halteelementen 15 getragen. In diesem Fall werden die Formlingsträger 20 nur noch von der Auflagefläche 13 der Positionierungseinrichtung 12 getragen. Der Heber 11 kann wie in Figur 3 in mehr Detail angedeutet, mit geeigneten mechanischen und/oder elektrischen Komponenten ausgestattet sein, die stufenloses oder gestuftes Absenken oder Wegschwenken der Halteelemente 15 ermöglichen.

Die Positionierungseinrichtung 12 ist dazu ausgelegt, mit den wenigstens zwei Positionierungsarmen 14 in die Positionierungselemente 22 der Formlingsträger 20 zu greifen. Dazu können die Positionierungsarme 14 vertikal bewegbar sein und in die Positionierungselemente 22, zum Beispiel die Aussparungen, hineingefahren werden. Des Weiteren sind die Positionierungsarme 14 dazu ausgelegt, sich zu drehen und sich in der horizontalen Ebene zu bewegen, um die Formlingsträger 20 auszurichten. Die Drehung der Positionierungsarme 14 erfolgt dabei vorzugsweise so, dass der Abstand der Positionierungsarme 14 während der Drehung unverändert bleibt und sich die Ebene dreht, welche die zwei Positionierungsarme 14 aufspannen. Werden die Positionierungsarme 14 so gedreht, während sie in die Positionierungselemente 22 eingeführt sind, so wird auch der Formlingsträger 20 gedreht. Ähnliches gilt für einen Verschiebevorgang. Die Positionierungsarme 14 können weiter dazu ausgelegt sein, sich oberhalb der Oberseite 26 der Formlingsträger 20 miteinander zu verbinden und zu verschließen, um ein Abnehmen der Formlingsträger 20 z.B. während des Transports zu verhindern. Alternativ könnten sich die Positionierungsarme 14 an oder mit dem Formlingsträger 20 verriegeln. Es sollte dabei jedoch in der Regel vermieden werden, dass die Formlingsträger 20 von den Positionierungsarmen geklemmt werden, um eine Beschädigung der Formlingsträger 20 zu vermeiden.

Die Positionierungsarme 14 können in einem Zustand, in dem der Heber 11 bzw. dessen Halteelemente 15 abgesenkt sind, die Formlingsträger 20 auszurichten. Dann sind die Füße 21 des Formlingsträgers 20 frei und liegen nicht mehr auf. Eine Drehung der Formlingsträger 20 mittels der Positionierungsarme 14 findet dann über den Drehpunkt statt, der durch die Auflagefläche 13 definiert ist. Dafür ist aufgrund der geringen Auflagefläche und der mittigen Anordnung im Bezug auf den Formlingsträger 20 nur ein geringer Kraftaufwand notwendig. Dasselbe gilt für ein Verschieben in der horizontalen Ebene des Formlingsträgers 20. Da die Füße 21 frei sind und nicht auf den Halteelementen 15 aufliegen, findet keine Reibung mit den Füße 21 statt und eine Beschädigung der Füße 21 wird dadurch verhindert. Nach Beendigung des Ausrichtvorgangs können die Positionierungsarme 14 entweder in die Positionierungselemente 22 eingeführt bleiben, oder davon entfernt werden. Zudem können die Positionierungsarme 14 entweder verriegelt werden, so dass eine Fixierung der Formlingsträger 20 während des Transports gegeben ist, oder können offen bleiben, um eine Beschädigung bei versehentlicher Bewegung oder versehentlichem Abgriff der Formlingsträger 20 von dem Transportmittel 10 zu vermeiden. Die Positionierungsarme 14 können sich in dem Formlingsträger 20 verriegeln, indem sie zum Beispiel seitliche Fixierungselemente ausfahren, so dass ein Abrutschen der Formlingsträger 20 von den Positionierungsarmen 14 unmöglich wird. Es sollte jedoch darauf geachtet werden, dass die Positionierungsarme 14 den Formlingsträger 20 nicht klemmen, um Beschädigungen zu vermeiden.

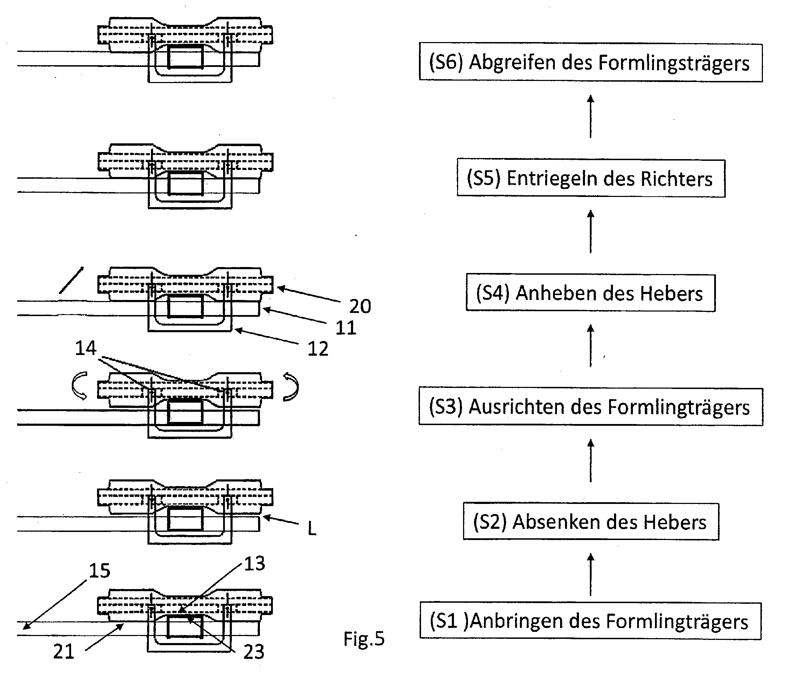

In Figur 5 ist ein Verfahren gezeigt, dass von unten nach oben die Schritte S1 bis S6 ausführt, die vorteilhafterweise zum Transportieren und Ausrichten der Formlingsträger 20 ausgeführt werden. Im ersten Schritt S1 wird der Formlingsträger 20 auf dem Transportmittel 10 angebracht bzw. aufgelegt. Dazu wird er zum Beispiel mit seinen Füßen 21 auf das Halteelement 15 des Hebers 11 abgesetzt und gleichzeitig mit seiner Unterseite 23 auf der Auflagefläche 13 der Positionierungseinrichtung 12 abgesetzt. Die Positionierungsarme 14 der Positionierungseinrichtung 12 können entweder direkt in die Positionierungselemente 22 des Formlingsträgers 20 eingeführt werden, oder können in einen zurückgefahrenen (hier nicht gezeigten) Zustand gesetzt werden, so dass sie noch nicht mit den Positionierungselementen 22 eingreifen.

Im zweiten Schritt S2 wird das Ausrichten der Formlingsträger 20 vorbereitet. Dazu wird der Heber 11 bzw. dessen Halteelemente 15 abgesenkt, so dass eine Lücke L zwischen dem Halteelement 15 und den Füßen 21 des Formlingsträgers 20 entsteht. Die Füße 21 des Formlingsträgers 20 sind nun also frei und der Formlingsträger 20 wird nur von der Auflagefläche 13 der Positionierungseinrichtung 12 getragen. Die Positionierungsarme 14 sind gegebenenfalls schon durch die Positionierungselemente 22 geführt, tragen aber nicht zum Stützen des Formlingsträgers 20 bei.

Im dritten Schritt S3 wird dann das Ausrichten des Formlingsträgers 20 durchgeführt. Das heißt dessen Lage oder Position wird eingestellt, entweder durch verschieben in der horizontalen Ebene oder durch verdrehen (wie von den Pfeilen symbolisiert). Dazu werden, falls die Positionierungsarme 14 noch nicht mit den Positionierungselementen 22 eingreifen, diese dort hinein bewegt und optional in dem Formlingsträger 20 geschlossen. Der Formlingsträger 20 sollte dabei aber auf keinen Fall geklemmt werden und sollte nur durch geringen Kraftaufwand von den Positionierungsarmen 14 gedreht oder verschoben werden, um eine Beschädigung zu vermeiden.

Im vierten Schritt S4 wird der Formlingsträger 20 transportiert (wie von dem Pfeil symbolisiert), wofür der Heber 11 bzw. dessen Hebeelemente 15 wieder angehoben werden, um die Füße 21 des Formlingsträgers 20 erneut zu tragen. Der Formlingsträger 20 liegt nun wieder auf den Füßen 21 und auf seiner Unterseite 23 auf dem Halteelement 15 bzw. der Auflagefläche 13 auf. Die Positionierungsarme 14 bleiben vorteilhafterweise während des Transports eingegriffen mit den Positionierungselementen 22. Zudem ist auch denkbar, dass sich die Positionierungsarme 14 mit dem Formlingsträger 20 oder miteinander verriegeln beziehungsweise verschließen, um eine weitere Verdrehung oder Verschiebung des Formlingsträgers 20 während dem Transport zu verhindern.

Nach Ende des Transports werden die Positionierungsarme 14 im fünften Schritt S5 entriegelt und/oder aus dem Positionierungselementen 22 gelöst, um ein Abgreifen des Formlingsträgers 20 von dem Transportmittel 10 im sechsten Schritt S6 zu ermöglichen.

Das oben beschriebene Verfahren weist die Vorteile auf, dass die Formlingsträger 20 ausgerichtet und zentriert transportiert werden können, und die Ausrichtung mit wenig Kraftaufwand erfolgt und die Füße 21 der Formlingsträger 20 nicht beschädigt. Dies erhöht die Lebensdauer des erfindungsgemäßen Transportsystems 1 und spart Kosten sowie Wartungsarbeiten.

Das Absenken des Hebers 11 bzw. der Hebeelemente 15 und das Ausrichten des Formlingsträgers 20 durch Verschieben oder Verdrehen mittels der Positionierungsarme 14 kann automatisch von einer Steuereinrichtung des Transportsystems ausgeführt werden. Es ist denkbar, dass die Steuereinrichtung einen vorgegebenen Vorgang zum Zentrieren und Ausrichten ausführt, sobald ein Transport der Formlingsträger 20 gestartet wird. Alternativ kann auch eine manuelle Anweisung über eine Eingabevorrichtung vorgenommen werden, um ein Ausrichten zu erzwingen. Es ist auch denkbar, dass jeder Formlingsträger 20 ausgerichtet wird, sobald er eine vorgegebene Position in seiner Transportrichtung erreicht, die zum Beispiel durch eine Lichtschranke oder einen anderen geeigneten Mechanismus erfasst wird. Die korrekte Ausrichtung, das heißt die korrekte Position und Lage des Formlingsträgers 20 auf dem Transportmittel 10, kann zudem durch zusätzliche optische oder magnetische Sensoren überprüft werden. Dadurch kann eine genaue und gleichmäßige Ausrichtung aller Formlingsträger 20 erzielt werden. Es ist auch denkbar, dass das Transportsystem 1 ein Verrutschen oder Verdrehen der Formlingsträger 20 durch Überwachung mittels geeigneter Sensoren bemerkt und einen entsprechenden zusätzlichen Ausrichtungsvorgang erzwingt.

Das Ausrichten kann entweder vor dem Transportieren der Formlingsträger 20, das heißt vor dem Anfahren der Transportbänder 17, ausgeführt werden, oder während des Transports bei durchgängig laufendem Transportband 17. Die Lage und Position der Formlingsträger 20 kann gemäß einer voreingestellten und im Transportsystem 1 gespeicherten Lage und Position ausgeführt werden. Diese kann für verschiedene Formlingsträger 20 unterschiedlich sein, falls zum Beispiel verschiedene Formlinge transportiert werden sollen und/oder in verschiedenen Ausrichtungen transportiert werden sollen. Das Transportsystem 1 kann dabei in der Lage sein automatisch die verwendeten Formlingsträger 20 zu erkennen und die entsprechende Positionierung und Lage aus dem Speicher auszulesen und einzustellen.

Verschiedene mögliche Modifikationen der oben beschriebenen Erfindung werden im Folgenden erläutert. Zum Beispiel kann die Positionierungseinrichtung 12 so ausgelegt sein, dass die Auflagefläche 13 dazu verwendet wird die Formlingsträger 20 in der horizontalen Ebene zu verschieben, wohingegen die Positionierungsarme 14 in diesem Fall nur dazu verwendet werden, die Formlingsträger 20 zu drehen, um sie auf dem Transportmittel auszurichten. Es ist auch denkbar, dass zur Ausrichtung der Formlingsträger 20 die Positionierungseinrichtung 12 die Auflagefläche 13 anhebt, anstatt dass der Heber 11 gesenkt wird, um die Füße 21 der Formlingsträger 20 frei schweben zu lassen und die Formlingsträger 20 in diesem Zustand auszurichten. Wichtig ist nur, dass während des Ausrichtens die Füße 21 der Formlingsträger 20 nicht auf den Halteelementen 15 oder auf einer anderen Auflagefläche aufliegen, damit sie nicht beschädigt werden.

Der Heber 11 kann ferner auch aus zwei separaten Teilen für die Formlingsträger 20 auf der linken und auf der rechten Seite wie in Figur 5a gezeigt sein. Es können entweder die linksseitigen und die rechtsseitigen Formlingsträger 20 separat oder gemeinsam angehoben werden, ebenso können sie separat oder gemeinsam durch die Positionierungseinrichtung 12 ausgerichtet werden.
Es ist auch denkbar, mehrere Formlingsträger 20 auf dem Transportmittel 10 übereinander zu stapeln, und die Positionierungseinrichtung 12 so zu gestalten, dass die übereinander gestapelten Formlingsträger 20 gleichzeitig ausgerichtet werden können. Dazu können zum Beispiel die Positionierungsarme 14 durch die Positionierungselemente 22 mehrerer übereinander gestapelter Formlingsträger 20 greifen, und diese bezüglich ihrer Lage und Position ausrichten. Die Stapelung sollte dabei so erfolgen, dass zwischen jeweils zwei übereinander gestapelten Formlingsträgern ein weiterer Heber 11 oder weitere Halteelemente 15 des Hebers 11 angeordnet sind, um die Formlingsträger 20 voneinander abzuheben. Die Füße der Formlingsträger 20 sollten beim Ausrichten alle frei und ohne untere Unterstützung sein.

Zusammenfassend offenbart die Erfindung ein Transportsystem 1 mit dem Formlinge auf Formlingsträgern 20 transportiert werden können. Durch einen Heber 11 und eine Positionierungseinrichtung 12 des Transportmittels 10, welches die Formlingsträger 20 trägt, können die Formlingsträger 20 bezüglich ihrer Lage und Position auf dem Transportmittel 10 ausgerichtet werden. Durch die genaue Ausrichtung der Formlingsträger 20 wird eine möglichst gute Qualität und Formstabilität der Formlinge gewährleistet. Ferner wird die Manipulation der Formlingsträger 20, zum Beispiel das Be- und Entladen, deutlich vereinfacht.

Das erfindungsgemäße Transportsystem 1 ist ferner dazu in der Lage, den Heber 11 abzusenken, so dass die Füße 21 der Formlingsträger 20 frei schweben, und die Formlingsträger 20 nur noch durch eine Auflagefläche 13 der Positionierungseinrichtung 12 auf ihrer Unterseite 23 getragen werden. Die Positionierungseinrichtung 12 ist dazu geeignet, die Formlingsträger 20 bezüglich ihrer Lage und Position auszurichten. Dabei verwendet die Positionierungseinrichtung 12 beispielsweise wenigstens zwei Positionierungsarme 14, die ohne die Formlingsträger 20 zu klemmen, ein Verschieben oder Verdrehen der Formlingsträger 20 auf dem Transportmittel 10 durchführen können. Da während des Ausrichtens der Formlingsträger 20 dessen Füße 21 nicht aufliegen, werden diese keinen Reibungskräften ausgesetzt. Dadurch wird der Verschleiß verringert und die Lebensdauer der Formlingsträger 20 erhöht. Außerdem dient zum Verdrehen der Formlingsträger 20 nur noch die Auflagefläche 13 als Drehpunkt, die mittig der Formlingsträger 20 angeordnet ist, und die vorzugsweise weiter außen angeordneten Positionierungsarmen 14 können die Formlingsträger 20 mit geringem Kraftaufwand drehen. Dadurch wird auch der Energieverbrauch des Transportsystems 1 verringert.

## Patentansprüche

1. Transportsystem (1) für Formlinge aufweisend
wenigstens einen Formlingsträger (20) zum Aufnehmen von Formlingen, der wenigstens zwei seitliche Füße (21) und ein Positionierungselement (22) auf seiner Unterseite (23) aufweist;
wenigstens ein Transportmittel (10) zum Transportieren des wenigstens einen Formlingsträgers (20), **dadurch gekennzeichnet, dass** das Transportmittel (10) aufweist
einen in vertikaler Richtung beweglichen Heber (11) zum Tragen der wenigstens zwei seitlichen Füße (21) des wenigstens einen Formlingsträgers (20);
eine Positionierungseinrichtung (12) zum Tragen der Unterseite (23) des wenigstens einen Formlingsträgers (20), die ferner dazu ausgelegt ist, in das wenigstens eine Positionierungselement (22) einzugreifen;
wobei das Transportsystem (1) dazu ausgelegt ist, den Heber (11) abzusenken, bis die seitlichen Füße (21) des wenigstens einen Formlingsträgers (20) frei sind, und bei abgesenktem Heber (11) den wenigstens einen Formlingsträger (20) bezüglich seiner Lage und Position auf dem Transportmittel (10) mittels der Positionierungseinrichtung (12) auszurichten.

2. Transportsystem (1) gemäß Anspruch 1, wobei
der wenigstens eine Formlingsträger (20) eine rechteckige Form aufweist, wobei jeweils wenigstens ein seitlicher Fuß (21) an zwei seiner gegenüberliegenden Enden (25) angeordnet ist und
wenigstens zwei Positionierungselemente (22) mittig des Formlingsträgers (20) zwischen den wenigstens zwei seitlichen Füßen (21) angeordnet sind.

3. Transportsystem (1) gemäß Anspruch 2, wobei die Positionierungseinrichtung (12) aufweist
eine Auflagefläche (13) zum Tragen der Unterseite (23) des wenigstens einen Formlingsträgers (20) in einem Bereich zwischen den zwei seitlichen Füßen (21) und zwischen den wenigstens zwei Positionierungselementen (22) und
wenigstens zwei bewegliche Positionierungsarme (14) zum Eingreifen in die wenigstens zwei Positionierungselemente (22).

4. Transportsystem (1) gemäß Anspruch 3, wobei
die Positionierungseinrichtung (12) dazu ausgelegt ist, den wenigstens einen Formlingsträger (20) zur Ausrichtung dessen Lage und Position auf dem Transportmittel (10) mittels der Positionierungsarme (14) zu verschieben und/oder zu verdrehen.

5. Transportsystem (1) gemäß Anspruch 4, wobei
die wenigstens zwei Positionierungselemente (22) wenigstens zwei Aussparungen in dem wenigstens einen Formlingsträger (20) sind;
die Positionierungsarme (14) dazu ausgelegt sind, in je eine der Aussparungen zu greifen und sich zu schließen.

6. Transportsystem (1) gemäß einem der Ansprüche 1 bis 5, wobei
der Heber (11) wenigstens zwei Halteelemente (15) zum Halten jeweils eines seitlichen Fußes (21) des wenigstens einen Formlingsträgers (20) aufweist, wobei die Halteelemente abgesenkt werden können.

7. Transportsystem (1) gemäß Anspruch 6, wobei
die Positionierungseinrichtung (12) wenigstens eine Auflage (16) aufweist, auf welche die Halteelemente (15) des Hebers (11) in dessen abgesenkten Zustand gestützt sind.

8. Transportsystem (1) gemäß einem der Ansprüche 1 bis 7, wobei
das wenigstens eine Transportmittel (10) ein Transportwagen ist, der mittels eines Fahrantriebs (19) horizontal auf einem Transportband (17) des Transportsystems (1) transportierbar ist.

9. Transportverfahren für Formlinge, das die Schritte aufweist:
Auflegen zu transportierender Formlinge auf wenigstens einem Formlingsträger (20), der wenigstens zwei seitliche Füße (21) und ein Positionierungselement (22) auf seiner Unterseite (23) aufweist,
Aufbringen des wenigstens einen Formlingsträgers (20) auf einem Transportmittel (10) eines Transportsystems (1), so dass ein Heber (11) des Transportmittels (10) die seitlichen Füße (12) trägt und eine Positionierungseinrichtung (12) des Transportmittels (10) die Unterseite (23) trägt, wobei der Positionierungseinrichtung (12) ferner in das wenigstens eine Positionierungselement (22) eingreift;
Absenken des Hebers (11), bis die seitlichen Füße (21) frei sind;
Ausrichten der Lage und Position des Formlingsträgers (20) auf dem Transportmittel (10) mittels der Positionierungseinrichtung (12).

10. Transportverfahren gemäß Anspruch 9, wobei der Heber (11) abgesenkt wird und auf eine Auflage (13) der Positionierungseinrichtung (12) gestützt wird.

11. Transportverfahren gemäß Anspruch 9 oder 10, wobei die Positionierungseinrichtung (12) mit wenigstens zwei Positionierungsarmen (14) in wenigstens zwei Positionierungselemente (22) eingreift, wobei sich die Positionierungsarme schließen.

12. Transportverfahren gemäß Anspruch 11, wobei die wenigstens zwei Positionierungsarme (14) während des Transports der Formlinge (2) geschlossen bleiben und der Heber (11) zum Transport angehoben wird, so dass er die seitlichen Füße (21) des Formlingsträgers (20) trägt.

13. Transportverfahren gemäß Anspruch 12, wobei die wenigstens zwei Positionierungsarme (14) vor dem Entfernen des Formlingsträgers (20) von dem Transportmittel (10) geöffnet werden.

## Claims

1. Transport system (1) for blanks comprising:
At least one blank carrier (20) for carrying blanks having at least two lateral feet (21) and a positioning element (22) on its (23) underneath;
At least one means of transport (10) for transporting the at least one blank carrier (20), **characterised in that** the means of transport (10) comprises:
A vertically movable lift (11) for carrying the at least two lateral feet (21) of the at least one blank carrier (20);
A positioning device (12) to support the underneath surface (23) of the at least one blank carrier (20), which is also designed to fit into the at least one positioning element (22);
Whereby the transport system (1) is so designed that it lowers the lift (11) until the two lateral feet (21) of the at least one blank carrier (20) are free and when the lift (11) is lowered it arranges the position of the at least one blank carrier (20) on the means of transport (10) by means of the positioning device (12).

2. Transport system (1) according to Claim 1, whereby
The at least one blank carrier (20) is rectangular in shape, whereby at least one lateral foot (21) is arranged at two of its opposing ends (25) and
At least two positioning elements (22) are arranged in the centre of the blank carrier (20) between the at least two lateral feet (21).

3. Transport system (1) according to Claim 2, whereby the positioning device (12) comprises:
A supporting surface (13) to support the underneath surface (23) of the at least one blank carrier (20) in an area between the two lateral feet (21) and between the at least two positioning elements (22) and
At least two movable positioning arms (14) to engage in the at least two positioning elements (22).

4. Transport system (1) according to Claim 3, whereby
The positioning device (12) is designed in such a way that it can displace and/or rotate the at least one bank carrier (20) and adjust the latter's position on the means of transport (10) by means of the positioning arms (14).

5. Transport system (1) according to Claim 4, whereby
The at least two positioning elements (22) are in the form of at least two recesses in the at least one blank carrier (20);
The positioning arms (14) are designed in such a way that they can each fit into one of the said grooves and close.

6. Transport system (1) according to any of the Claims 1 to 5, whereby
The lift (11) comprises at least two holding elements (15) for holding each of the lateral feet (21) of the at least one blank carrier (20), whereby the holding elements can be lowered.

7. Transport system (1) according to Claim 6, whereby
The positioning element (12) comprises at least one supporting block (16), on which the holding elements (15) of the lift (11) are supported in their lowered position.

8. Transport system (1) according to any of the Claims 1 to 7, whereby
The at least one means of transport (10) is a transporter vehicle, which by means of a drive system (19) can be transported horizontally on a transporter belt (17) of the transport system (1).

9. Transport process for blanks that comprises the following stages:
Placing the blanks to be transported on at least one blank carrier (20), which comprises at least two lateral feet (21) and a positioning element (22) on its underneath side (23),
Arranging the at least one blank carrier (20) on the means of transport (10) of a transport system (1), so that a lift (11) of the means of transport (10) carries the lateral feet (21) and a positioning device (12) of the means of transport (10) supports the underneath side (23), whereby the positioning device (12) extends further into the at least one positioning element (22);
Lowering the lift (11), until the lateral feet (21) are free;
Finally arranging the position of the blank carrier (20) on the means of transport (10) by means of the positioning device (12).

10. Transport process according to Claim 9, whereby the lift (11) is lowered and supported by a supporting block (13) of the positioning device (12).

11. Transport process according to Claim 9 or 10, whereby with at least two positioning arms (14) the positioning device (12) engages in at least two positioning elements (22), whereby the positioning arms close.

12. Transport process according to Claim 11, whereby the at least two positioning arms (14) remain closed during the transportation of the blanks (2) and the lift (11) is raised for the transportation so that it can carry the lateral feet (21) of the blank carrier (20).

13. Transport process according to Claim 12, whereby the at least two positioning arms (14) are opened before the blank carrier (20) is removed from the means of transport (10).

## Revendications

1. Système de transport (1) pour ébauches, comportant au moins un support d'ébauches (20), destiné à recevoir des ébauches, qui présente au moins deux pieds latéraux (21) et un élément de positionnement (22) sur sa face inférieure (23) ;
au moins un moyen de transport (10) pour transporter le ou les supports d'ébauches (20),
**caractérisé en ce que** le moyen de transport (10) comprend
un vérin de levage (11), pouvant se déplacer dans la direction verticale, pour supporter les au moins deux pieds latéraux (21) du ou des supports d'ébauches (20),
un dispositif de positionnement (12), pour supporter la face inférieure (23) du ou des supports d'ébauches (20), qui en outre est configuré de façon à entrer en prise avec le ou les éléments de positionnement (22),
le système de transport (1) étant configuré de façon à abaisser le vérin de levage (11) jusqu'à ce que les pieds latéraux (21) du ou des supports d'ébauches (20) soient dégagés et, quand le vérin de levage (11) est abaissé, pour orienter le ou les supports d'ébauches (20), pour ce qui concerne leur position et leur situation, sur le moyen de transport (10) à l'aide du dispositif de positionnement (12).

2. Système de transport (1) selon la revendication 1, dans lequel
le ou les supports d'ébauches (20) présentent une forme rectangulaire, au moins un pied latéral (21) étant disposé contre chacune de deux de leurs extrémités opposées (25), et
au moins deux éléments de positionnement (22) étant disposés au milieu du support d'ébauches (20) entre les au moins deux pieds latéraux (21).

3. Système de transport (1) selon la revendication 2, dans lequel le dispositif de positionnement (12) comprend
une surface d'appui (13) pour supporter la face inférieure (23) du ou des supports d'ébauches (20) dans une zone située entre les deux pieds latéraux (21) et entre les au moins deux éléments de positionnement (22), et
au moins deux bras de positionnement mobiles (14), destinés à entrer en prise avec les au moins deux éléments de positionnement (22).

4. Système de transport (1) selon la revendication 3, dans lequel
le dispositif de positionnement (12) est configuré de façon à faire subir un mouvement de déplacement et/ou de torsion à au moins un support d'ébauches (20), pour aligner sa situation et sa position à celles du moyen de transport (10) à l'aide des bras de positionnement (14).

5. Système de transport (1) selon la revendication 4, dans lequel
les au moins deux éléments de positionnement (22) sont au moins deux évidements aménagés dans le ou les supports d'ébauches (20),
les bras de positionnement (14) sont configurés de façon à entrer en prise avec chacun des évidements, et à les obturer.

6. Système de transport (1) selon l'une des revendications 1 à 5, dans lequel
le vérin de levage (11) comprend au moins deux organes d'arrêt (15), pour arrêter chacun un pied latéral (21) du ou des supports d'ébauches (20), les organes d'arrêt pouvant être abaissés.

7. Système de transport (1) selon la revendication 6, dans lequel
le dispositif de positionnement (12) comprend au moins un appui (16), sur lequel s'appuient les organes d'arrêt (15) du vérin de levage (11) dans son état abaissé.

8. Système de transport (1) selon l'une des revendications 1 à 7, dans lequel
le ou les moyens de transport (10) sont des chariots, qui au moyen d'un système d'entraînement (19) peuvent être transportés horizontalement sur une bande transporteuse (17) du système de transport (1).

9. Procédé de transport pour ébauches, qui comprend les étapes suivantes :
mise en place des ébauches à transporter sur au moins un support d'ébauches (20), qui comprend au moins deux pieds latéraux (21) et un élément de positionnement (22) sur sa face latérale (23),
amenée du ou des supports d'ébauches (20) sur un moyen de transport (10) d'un système de transport (1) de telle sorte qu'un vérin de levage (11) du moyen de transport (10) supporte les pieds latéraux (12) et qu'un dispositif de positionnement (12) du moyen de transport (10) supporte la face inférieure (23), le dispositif de positionnement (12) entrant en outre en prise avec le ou les éléments de positionnement (22),
abaissement du vérin de levage (11) jusqu'à dégagement des pieds latéraux (21),
alignement de la situation et de la position du support d'ébauches (20) à celles du moyen de transport (10) à l'aide du dispositif de positionnement (12).

10. Procédé de transport selon la revendication 9, dans lequel le vérin de levage (11) est abaissé, et vient s'appuyer sur un appui (13) du dispositif de positionnement (12).

11. Procédé de transport selon la revendication 9 ou 10, dans lequel le dispositif de positionnement (12) entre en prise, par au moins deux bras de positionnement (14), avec au moins deux éléments de positionnement (22), avec refermement des bras de positionnement.

12. Procédé de transport selon la revendication 11, dans lequel les au moins deux bras de positionnement (14) restent refermés pendant le transport des ébauches (2), et le vérin de levage (11) est relevé pour le transport de façon à supporter les pieds latéraux (21) du support d'ébauches (20).

13. Procédé de transport selon la revendication 12, dans lequel les au moins deux bras de positionnement (14) s'ouvrent avant que le support d'ébauches (20) ne s'écarte du moyen de transport (10).
